# EUROPÄISCHE PATENTSCHRIFT

(11) **EP 3 134 964 B1**
(45) Veröffentlichungstag und Bekanntmachung des Hinweises auf die Patenterteilung: **03.10.2018**
(21) Anmeldenummer: 15736385.4
(22) Anmeldetag: 23.04.2015
(51) Int. Cl.: H02P 6/10, G01D 18/00

(54) **VERFAHREN UND ANORDNUNG ZUR VERRINGERUNG DER DREHMOMENTWELLIGKEIT EINES GLEICHSTROMMOTORS**
METHOD AND DEVICE FOR TORQUE RIPPLE REDUCTION OF A DC MOTOR
PROCEDE ET DISPOSITIF POUR REDUIRE L'ONDULATION DE COUPLE DANS UN MOTEUR A COURANT CONTINU

(30) Priorität: 23.04.2014 DE 102014105730
(43) Veröffentlichungstag der Anmeldung: 01.03.2017
(73) Patentinhaber: Kastanienbaum GmbH, 80538 München (DE)
(72) Erfinder: SPENNINGER, Andreas, 85757 Karlsfeld (DE); BÖHME, Niklas, 42549 Velbert (DE); HADDADIN, Sami, 30173 Hannover (DE)
(74) Vertreter: Rasch, Michael
(86) Internationale Anmeldenummer: PCT/DE2015/100171
(87) Internationale Veröffentlichungsnummer: WO 2015/161844

(56) Entgegenhaltungen:
- EP-A2- 1 061 640
- EP-A2- 1 496 603
- DE-A1- 3 941 495
- DE-A1- 4 026 091
- DE-T2- 69 217 199
- DE-T2- 69 605 019

## Beschreibung

Die Erfindung betrifft ein Verfahren zur Verringerung der Drehmomentwelligkeit eines Gleichstrommotors nach dem Oberbegriff des Anspruchs 1 sowie eine Anordnung zur Steuerung eines Gleichstrommotors nach dem Oberbegriff des Anspruchs 7.

In vielen technischen Bereichen kommen Gleichstrommotoren zur Anwendung, insbesondere bürstenlose Gleichstrommotoren, die im Prinzip als Drehstromsynchronmaschinen mit Erregung durch Permanentmagnete ausgeführt sind. Das drehende magnetische Feld der Drehstromwicklung führt dabei zu einer Bewegung des permanenterregten Rotors. Durch Verwendung geeigneter Regler zeigt ein solcher Motor das Verhalten eines Gleichstrommotors. Derartige Motoren kommen insbesondere in kleinen Antrieben zum Einsatz. Bei Verwendung geeigneter Getriebe mit hohem Übersetzungsverhältnis können auch bei kleinen Motoren hohe Drehmomente erreicht werden, wie es insbesondere im Roboterbau relevant ist.

In der Regel ist die Drehstromwicklung eines solchen Motors dreisträngig ausgeführt.

Durch Magnetisierungsvorgänge der eisenhaltigen Statorstruktur in den Spulen aber auch durch mechanische Ungenauigkeiten wie variable Stärken der Magnete, unterschiedlich ausgeprägte Wicklungen oder ungenau platzierte Magnete entstehen Drehmomentschwankungen, die gerade bei günstigen Motoren stark ausgeprägt sind. Diese Schwankungen sind bei Verwendung in hochpräzisen Anwendungen und bei kleinen Drehzahlen, wie sie im Falle von Robotergelenken auftreten, störend und ungeeignet, wenn eine hohe Präzision erforderlich ist. Zur Verringerung derartiger Drehmomentschwankungen können zwar auch Motoren mit höheren Phasenzahlen verwendet werden, jedoch erfordert dies höheren Aufwand und verursacht auch signifikant höhere Kosten.

Ein anderer Ansatz zur Verringerung der Drehmomentwelligkeit besteht darin, eisen lose Rotoren zu verwenden, die selbsttragende Spulen aufweisen. Gleichwohl lässt sich auf diese Weise die Drehmomentwelligkeit nur reduzieren, aber nicht vermeiden.

Die Regelung eines bürstenlosen Gleichstrommotors kann über eine sensorgesteuerte Kommutierung erfolgen, welche auch bei geringen Drehzahlen oder im Stillstand des Motors funktioniert. Bei höheren Ansprüchen ist es auch bekannt, eine Vektorregelung zu verwenden, bei der die Spannungen der Rotorphasen dem gewünschten Drehmoment angepasst werden.

Es sind auch Systeme bekannt, bei denen die Drehmomentwelligkeit eines Motors elektronisch ausgeregelt wird, indem dem Steuerstrom des Motors während seiner Drehung Korrekturdaten aufgeprägt werden, die aus mechanischen Daten des Motors ermittelt wurden und in einem Speicher abgelegt sind, so dass sie positionsabhängig dem jeweiligen Motorstrom überlagert werden können. Ein solches System ist aus der DE 39 41 553 A1 bekannt. Dort sind in einem Funktionsspeicher mehrere verschiedene aus dem Kraft- und Drehmomentverlauf des Motors und ggf. einer angeschlossenen Last ermittelte verschiedene Einflüsse berücksichtige Datensätze in Form von Tabellen gespeichert, wobei die Datensätze positionsabhängig oder zeitabhängig abgerufen und mit einer Eingangsgröße verknüpft werden können, um zu positions- und zeitabhängigen Augenblickswerten zusammengesetzt zu werden. Die den Kraft- bzw. Drehmomentverlauf des Motors berücksichtigenden Datensätze werden dabei durch Messläufe zur Optimierung bzw. Erreichung des vorgegebenen Kraft- bzw. Drehmomentverlaufs eines Motors auf einem Mess- und Prüfstand ermittelt. Alternativ können die Datensätze aus einem Muster von gemessenen Parametern und/oder Kennlinien berechnet werden.

Ein ähnliches Verfahren ist aus der EP 564 608 B1 bekannt. Auch dort wird ein Speicher mit einer Tabelle von Werten verwendet, die zur Korrektur der Steuerströme zum Antrieb des Motors verwendet werden.

In der EP 1 638 200 B1 ist ein Verfahren zum Reduzieren der Drehmomentwelligkeit in einem Motor beschrieben, bei dem zwischen den Phasen der Motorsteuereinheit eine Spannungsdifferenz bestimmt wird und in einem Speicher Ausgleichsverstärkungen für die Phasen in Abhängigkeit der Phasenwinkel gespeichert werden, so dass die Verstärkung der jeweiligen Phasen so eingestellt werden kann, dass die Drehmomentwelligkeit reduziert wird.

Die nachfolgend angeführten Veröffentlichungen offenbaren weiteren Stand der Technik in Zusammenhang mit einer Reduzierung der Drehmomentwelligkeit in Motoren.

In der EP 1 496 603 A2 ist ein Motor sowie ein Steuer- und Regelungsverfahren für den Motor beschrieben. Der Motor umfasst ein Speichermedium zur Speicherung von TestInformationen, welche für den Motor individuell sind und die bei Tests während der Motorherstellung erfasst wurden. Durch Nutzung der Testinformationen erlauben eine Feinabstimmung jedes einzelnen Motors.

In der EP 1 061 640 A2 ist eine elektromagnetische Maschine sowie ein Verfahren zur Ansteuerung von Stadttorwindungen der elektromagnetischen Maschine offenbart.

In der DE 696 05 019 T2 ist ein vorbestimmte und in einem Festwertspeicher gespeicherte Antriebsströme anwendendes Antriebssystem für einen bürstenlosen Motor offenbart.

In der DE 692 17 199 T2 ist eine Vorrichtung und ein zugehöriges Verfahren zur Kompensation von Drehmomentschwankungen in einem permanent magnetischen elektrischen Motor offenbart.

In der DE 39 41 495 A1 ist ein Mess- und Prüfstand für elektromagnetische Wandler offenbart.

In der DE 40 26 091 A1 ist eine Vorrichtung sowie ein Verfahren zur Regelung von Systemen, deren Störgrößen einen Zeit-oder Winkel periodischen Anteil enthalten offenbart.

Der Erfindung liegt die Aufgabe zugrunde, ein Verfahren zur Verringerung der Drehmomentwelligkeit eines bürstenlosen Gleichstrommotors sowie eine Anordnung zur Ausführung eines derartigen Verfahrens anzugeben, mit denen die Drehmomentwelligkeit auch bei einfach aufgebauten Motoren weitestgehend ausgeglichen werden kann und Störgrößen in nahezu jeder Drehstellung des Motors ausgeglichen werden können.

Die Erfindung geht aus von einem Verfahren zur Verringerung der Drehmomentweliigkeit eines bürstenlosen Gleichstrommotors in Gelenken eines Roboters mit einem Stator und einem Rotor mittels einer Motorsteuereinheit, über die der Motor mehrphasig angesteuert wird, und mit einem Datenspeicher zur Speicherung von drehwinkelabhängigen Korrekturdaten des Steuerstroms des Motors, welche den Augenblickswerten zur Ansteuerung des Motors aufgeprägt werden.

Erfindungsgemäß werden in einem ersten Schritt für jede Position des Rotors den Rotor in dieser Position haltende Strangströme ermittelt, aus denen Referenzstromdaten abgeleitet werden, welche in einer Tabelle des Datenspeichers zusammen mit den jeweiligen Positionsdaten des Motors abgespeichert werden. In einem zweiten Schritt werden im laufenden Betrieb des Motors die im Datenspeicher hinterlegten positionsabhängigen Referenzstromdaten mit den Steuerströmen des Motors derart verknüpft, dass die ursprüngliche Drehmomentwelligkeit des Motors aufgehoben oder verringert wird, wobei die an jeder Rotorposition ermittelten Referenzstromdaten in einem separaten Aufbereitungsschritt gefiltert und geglättet, indem nach einer Vorfilterung der Referenzstromdaten mit einem Mittelwert- und anschließendem Medianfilter um die ermittelten Medianwerte über den gesamten erfassten Drehwinkelbereich des Motors ein Tunnel gebildet wird, der in einem festen Abstand um die positionsbezogenen Medianwerte verläuft, wobei aus den innerhalb des Tunnels liegenden Referenzstromdaten für jede Position jeweils ein gemittelter Wert errechnet wird, bevor die gemittelten Werte abschließend geglättet werden, und die derart ermittelten Werte als bereinigte positionsbezogene Referenzstromwerte in dem Datenspeicher abgespeichert werden.

Die Erfindung beschreibt damit ein Verfahren zur Erzeugung von Korrekturdaten, die in einem Speicher abgelegt werden, um diese im laufenden Betrieb dem Steuerstrom des Motors aufprägen zu können, wodurch sich Unregelmäßigkeiten des Motorlaufs verschiedener Art ausgleichen lassen. In bevorzugter Weise wird ein bürstenloser Gleichstrommotor dazu zunächst in seiner Charakteristik in einem Prüflauf erfasst, wobei hier für jede einzelne Drehposition des Rotors die Drehposition beeinflussende Störgrößen erfasst werden, welche z. B. die Welligkeit aufgrund der permanentmagnetischen Erregung sein können, aber auch Einflussgrößen der Exzentrizität des Rotors, Lagereinflüsse, konstruktionsbedingte Einflüsse und Weiteres. Die auf diese Weise ermittelten Einflussgrößen werden als Korrekturdaten in einem elektronischen Speicher in Abhängigkeit von der jeweiligen Rotorposition des Motors gespeichert.

Neben den im Wesentlichen statischen positionsabhängigen Störgrößen können die erfassten Korrekturdaten auch durch weitere Korrekturdaten ergänzt werden, die sich z. B. aus dem dynamischen Verhalten des Motors ergeben, wie Beschleunigungen, Geschwindigkeiten, Unwuchten, Reibungen, Temperaturen, soweit diese Daten erfasst werden können oder bereits bekannt sind.

In einem zweiten Schritt, in dem der Motor im Normalbetrieb gefahren wird, werden die Korrekturdaten dem Steuerstrom des Motors aufgeprägt, so dass dieser an jeder Position des Rotors durch die Korrekturdaten so beeinflusst ist, dass sich damit ein gleichmäßiger Motorlauf mit gleichmäßigem Drehmoment ergibt.

Die Korrekturdaten des Motors können auf einem Prüfstand ermittelt werden, wobei aufgrund des einfachen Aufbaus der Auswerteschaltung jeder einzelne Motor einer Serie ausgemessen werden kann, was insbesondere bei konstruktiv sehr einfachen und billigen Motoren besondere Vorteile bietet.

Ein solcher Motor kann jedoch auch im bereits eingebauten Zustand ausgemessen werden, wodurch bei der Erfassung der Störgrößen auch an den Motor angeschlossene Konstruktionselemente, deren Einbau, Lage und weitere Einflussgrößen erfasst werden können.

Die Positionserfassung des Rotors umfasst jede Winkelstellung des Rotors, so dass Korrekturgrößen über den gesamten Umlauf des Rotors erfasst werden können. Wenn zusätzlich oder alternativ eine Positionserfassung an einem nachgeschalteten Getriebe an dessen Ausgang durchgeführt wird, können Korrekturwerte auch für größere Drehwinkel des Motors als 3600 erfasst werden, so dass damit auch eine Antriebskette bestehend aus Motor, Getriebe und ggf. weiteren mechanischen Elementen im Antriebsstrang erfasst werden können.

Das erfindungsgemäße Verfahren kann einmalig an einem "jungfräulichen" Motor ausgeführt werden. Es ist auch möglich, das Verfahren wiederholt in Abhängigkeit vom Verschleißgrad des Motors oder besonderen Belastungen auszuführen, oder das Verfahren jeweils vor dem Einsatz eines Betriebslaufs als "Kalibrierlauf" durchzuführen.

Die Ansteuerung des Motors erfolgt sowohl im Testbetrieb als auch im Normalbetrieb vorzugsweise über eine Vektorregelung, wobei die Steuerströme des Motors über eine Leistungselektronik als pulsweitenmodulierte Spannungen erzeugt werden, die über eine inverse Park-Transformation aus einem rotorbezogenen zweiphasigen Steuerstrom abgeleitet werden. Die Strangströme werden im Rückkopplungskreis über eine Park- und eine Clark-Transformation auf den Steuerstromeingang rückgeführt. Durch die Vektorregelung lässt sich ein statisches rotorbezogenes 2- Phasensystem in ein rotierendes statorbezogenes 2-Phasensystem transformieren. Über eine anschließende Pulsweitenmodulation und eine Leistungselektronik werden dreiphasige Strangströme erzeugt, die den Motor antreiben. Die dreiphasigen Steuerströme werden im Rückkopplungskreis über eine Clark-Transformation in ein rotierendes Zweiphasensystem rückgewandelt und über eine Park-Transformation wieder in ein Zweiphasensystem in Rotorkoordinaten transformiert, so dass sie als statische Ströme auf dem Steuerstrom zurückgekoppelt werden können. Der zum Halten des Motors im Testbetrieb in einer bestimmten Winkelstellung sich ergebende Steuerstrom wird in Abhängigkeit von der Winkelstellung des Motors in einer elektronischen Tabelle gespeichert, aus der die so ermittelten Korrekturdaten im laufenden Betrieb des Motors dem jeweiligen Steuerstrom überlagert werden.

In weiterer Ausgestaltung der Erfindung kann vorgesehen sein, dass dem Steuerstromeingang ein Positionsprädiktorregler vorgeschaltet ist, über den die positionsbezogene Aufprägung der aus dem Datenspeicher ausgelegenen Referenzstromdaten auf den Steuerstrom in Abhängigkeit von der Drehgeschwindigkeit des Rotors variiert werden kann.

Aufgrund der endlichen Bandbreite und Amplitude des Vektorreglers können damit die im Speicher abgelegten Korrekturdaten in Abhängigkeit von der Drehgeschwindigkeit des Rotors dem Steuerstrom an abweichenden Positionen aufgeprägt werden, so dass auf diese Weise geschwindigkeitsabhängige Fehler bei dem erfindungsgemäßen Korrekturverfahren ausgeglichen werden können.

Bei der Ausmessung der Korrekturdaten werden aus Genauigkeitsgründen jeweils mehrere Messwerte zu jeder Drehstellung des Motors aufgenommen. Insbesondere aufgrund von Einschwingvorgängen des Reglers weichen einige Messwerte von dem tatsächlichen Wert teilweise erheblich ab. Anders als bei einfachem weißem Rauschen lässt sich das Signal nicht ohne weiteres durch die Ermittlung des Mittelwertes zur Korrektur verwenden. Daher werden aus den Referenzstromdaten solche Daten eliminiert, die vorgegebene Grenzwerte über- oder unterschreiten. Aus den verbliebenen Korrekturdaten kann dann eine Mittelwertkurve gebildet werden, deren Einzelwerte als positionsabhängige Korrekturdaten gespeichert werden.

Ein derartiges Korrektursignal ist in vielen Fällen zum Ausgleich der Drehmomentwelligkeit ausreichend, jedoch wird ein verbessertes Verfahren zur Aufbereitung der Korrekturdaten bevorzugt, bei dem nach Entfernung von Daten, die vorgegebene obere und untere Grenzen überschreiten, die für jeden einzelnen Positionswert ermittelten Daten jeweils nach ihrer Größe derart sortiert werden, dass daraus ein Medianwert ermittelt werden kann. Um die jeweiligen Medianwerte, bezogen auf die einzelnen Rotorpositionen über den gesamten 360°-Winkel, wird ein Tunnel mit einer festen Fensterbreite gelegt, der damit ein Datenfenster bildet, das eine feste vertikale Breite aufweist, dessen jeweilige absolute Höhe in Abhängigkeit von dem jeweiligen Medianwert schwankt. Es werden nun nur noch diejenigen Korrekturdaten, die innerhalb des Fensters liegen, verwendet und es wird daraus ein Mittelwert gebildet, so dass damit Korrekturdaten erhalten werden, die von Ausreißern, statistischen Ungenauigkeiten und Reglereinflüssen weitestgehend befreit sind.

Die Erfindung ermöglicht es auch, abhängig vom Betriebszustand des Motors oder dem Belastungszustand zwischen mehreren gespeicherten Korrekturkurven zu wechseln, die in Abhängigkeit von bestimmten Parametern, z. B. der Belastung oder der Drehzahl ausgewählt werden. Die Umschaltung zwischen den Kurven kann automatisch im laufenden Betrieb auch während eines Umlaufs des Motors oder nur an bestimmten Winkelpositionen erfolgen.

Die Erfindung betrifft weiterhin eine Anordnung zur Steuerung eines bürstenlosen Gleichstrommotors zur Erfassung und zum Ausgleich einer Drehmomentwelligkeit des Motors mit einem Stator und einem Rotor mittels einer Motorsteuereinheit, über die der Motor mehrphasig ansteuerbar ist, mit einem Positionssensor am Rotor des Motors zur Erfassung der momentanen relativen oder absoluten Position des Rotors, und mit einem Datenspeicher zur Speicherung von drehwinkelabhängigen Korrekturdaten des Steuerstroms des Motors, welche den Augenblickswerten zur Ansteuerung des Motors aufgeprägt werden können, wobei wenigstens zwei Stromsensoren zur Erfassung der Strangströme des Rotors vorgesehen sind, die Strangströme zur Ansteuerung des Motors in drehwinkelabhängigen Positionen des Rotors feststellbar und als positionsbezogene Referenzstromwerte in einem Datenspeicher speicherbar sind, die Referenzstromwerte im laufenden Betrieb des Motors aus dem Datenspeicher (19) auslesbar und dem Steuerstrom zur Steuerung des Motors aufprägbar sind, wobei im laufenden Betrieb des Motors die im Datenspeicher hinterlegten positionsabhängigen Referenzstromdaten mit dem Steuerstrom des Motors derart verknüpft werden, dass die ursprüngliche Drehmomentwelligkeit des Motors aufgehoben oder verringert wird, wobei die an jeder Rotorposition ermittelten Referenzstromdaten in einem separaten Aufbereitungsschritt gefiltert und geglättet werden, indem nach einer Vorfilterung der Referenzstromdaten mit einem Mittelwert- und anschließendem Medianfilter um die ermittelten Medianwerte über den gesamten erfassten Drehwinkelbereich des Motors ein Tunnel (24) gebildet wird, der in einem festen Abstand um die positionsbezogenen Medianwerte verläuft, wobei aus den innerhalb des Tunnels liegenden Referenzstromdaten für jede Position jeweils ein gemittelter Wert errechnet wird, bevor die gemittelten Werte abschließend geglättet werden, und die derart ermittelten Werte als bereinigte positionsbezogene Referenzstromwerte in dem Datenspeicher abgespeichert werden.

Die erfindungsgemäße Anordnung zur Steuerung eines bürstenlosen Gleichstrommotors enthält einen Positionssensor am Rotor des Motors zur Erfassung der momentanen relativen oder absoluten Position des Rotors. Beim Testlauf des Motors werden die Strangströme zur Ansteuerung des Motors in drehwinkelabhängigen Positionen festgestellt und als positionsbezogene Referenzstromwerte zunächst in einem Datenspeicher gespeichert. Die Referenzstromwerte können im laufenden Betrieb des Motors aus dem Datenspeicher ausgelesen werden und dem Steuerstrom zur Steuerung des Motors aufgeprägt werden.

Die Anordnung enthält insbesondere eine Vektorregelung, die Folgendes umfasst: ein Transformationsmodul (inverse Park-Transformation) im Vorwärtsweg des Reglers zur Wandlung von einem rotorbezogenen 2-Phasensystem in ein statorbezogenes 2 Phasensystem, einer Leistungselektronik zur dreiphasigen Ansteuerung des Motors, ein Transformationsmodul (Clark-Transformation) zur Rückwandlung der Strangströme des Rotors in ein statorbezogenes 2- Phasensystem, und ein Transformationsmodul zur Umwandlung des statorbezogenen 2-Phasensystems in ein rotorbezogenes 2-Phasensystem, dessen Stromwerte auf den Steuerstrom rückgekoppelt werden.

Die Reglerarchitektur des Vektorreglers ist vorzugsweise als Software-Steuerung ausgeführt, die in einem digitalen Signalprozessor aufgenommen ist. Lediglich die Leistungselektronik bzw. Verstärkungsschaltung zur Ansteuerung der Strangströme des Motors sind hardwaremäßig ausgeführt. Die Vektorregelung verwendet im Wesentlichen als solche bereits bekannte Transformationsmodule, wie eine Park-Transformation und eine Clark-Transformation. Der Speicher zur Aufnahme der Korrekturdaten ist vorzugsweise ebenfalls Teil des digitalen Signalprozessors.

Um Reglerverzögerungen und Positionserfassungs-Laufzeiteinflüsse ausgleichen zu können, wird vorzugsweise ein Positionsprädiktorregler verwendet, der aus der Rotordrehzahl und der Winkelauflösung des Positionssensors im laufenden Betrieb des Motors einen neuen Positionswert ermittelt, an dem die Referenzstromdaten der ursprünglichen Position in Abhängigkeit von der momentanen Drehzahl des Motors dem Steuerstrom aufgeprägt werden. Damit können auch bei hohen Motordrehzahlen genaue positionsabhängige Korrekturen vorgenommen werden.

Die Erfindung eignet sich insbesondere zum Einsatz in einem Roboter, bei dem eine Vielzahl von Gelenken durch bürstenlose Gleichstrommotoren angetrieben werden, welche eine hohe Präzision erfordern. Gleichwohl lassen sich durch die Erfindung kostengünstige Motoren einsetzen. Des Weiteren erlaubt die Erfindung auch die Einbeziehung von Getrieben und anderen mechanischen Komponenten in den Korrekturprozess des Antriebsmotors.

Die Erfindung wird nachstehend anhand eines Ausführungsbeispiels näher erläutert. Es zeigen:
Fig. 1a, b eine schematische Darstellung von konstruktionsbedingten Einflussgrößen an einem bürstenlosen Gleichstrommotor auf die Drehmomentwelligkeit,
Fig. 2 einen prinzipiellen Schaltungsaufbau einer Anordnung zur Erfassung von Korrekturdaten eines bürstenlosen Gleichstrommotors,
Fig. 3 eine Anordnung zur Korrektur des Steuerstroms mit Hilfe von aus einem Speicher abgelesenen Korrekturdaten,
Fig. 4 eine Darstellung zur Erläuterung eines Verfahrens zur Verbesserung der ermittelten Korrekturdaten, und
Fig.5 eine Darstellung drehzahlabhängigen Gleichstrommotor zur Erläuterung Einflussgrößen bei einer Korrektur von einem bürstenlosen Gleichstrommotor.

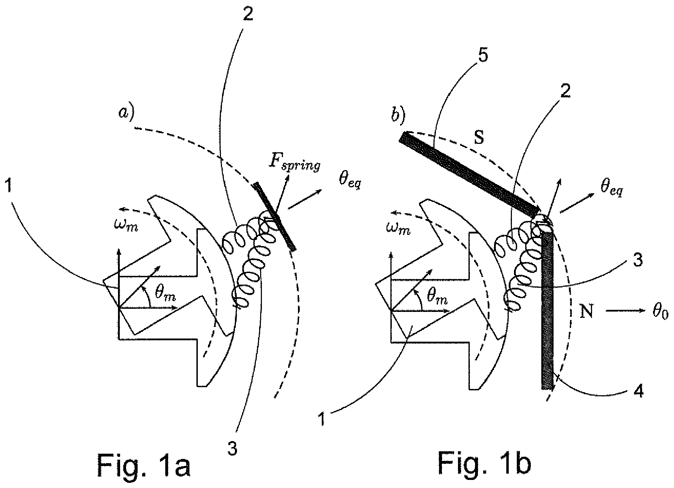

Fig. 1a zeigt eine Prinzipdarstellung eines mechanischen Äquivalents eines bürstenloses Gleichstrommotors, bei dem ein Rotor 1 über Federn 2 und 3 an einem Gleichgewichtspunkt befestigt ist. Die Federkraft am Gleichgewichtspunkt entspricht im Wesentlichen der über die Feder 2 an diesem Punkt angreifenden Kraft minus der Federkraft der Feder 3 aufgrund der Auslenkung des Rotors 1 aus der Gleichgewichtslage.

In Fig. 1b ist ein entsprechendes Diagramm dargestellt, das einen Nordpol 4 und einen Südpol 5 zeigt, die das Permanentmagnetfeld bei einem bürstenlosen Gleichstrommotor darstellen. Um einen Rotor 1 in die Gleichgewichtslage zwischen dem Permanentmagneten zu bringen, ist ein Strom erforderlich, der zur Kompensation der magnetischen Kräfte, symbolisiert durch Federn 2 und 3, erforderlich ist.

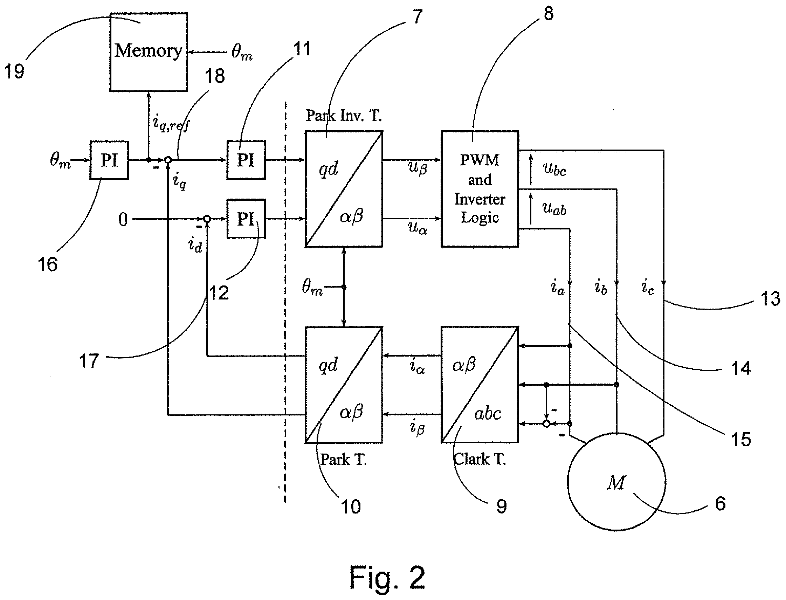

Fig. 2 zeigt eine Regelschaltung zur Ermittlung von Korrekturdaten zum Ausgleich von Drehmomentwelligkeiten an einem bürstenlosen Gleichstrommotor.

Aus der Rotorstellung des Motors 6 wird über einen PI-Regler ein Referenzstrom iq,ref abgeleitet, der als Führungsgröße über einen Vektorregler den Motor 6 so einstellt, dass dieser eine bestimmte Drehwinkelposition einhält. Die Führungsgröße ist in einem zweiphasigen rotorbezogenen Koordinatensystem dargestellt. Über PI-Regler 11, 12 und eine anschließende inverse Park-Transformation 7 wird das statische rotorbezogene Koordinatensystem in ein rotierendes Koordinatensystem mit den Spannungen U_{β} und U_{α} umgewandelt. In einem Funktionsblock 8 erfolgt eine Pulsweitenmodulation und Verstärkung des rotierenden 2-Phasensystems in einem rotierenden 3-Phasensyslem, bei dem der Verstärker Strangströme 13, 14 und 15 zur Ansteuerung des Motors 6 erzeugt. Die Rückführung der Regelgröße erfolgt über eine Clark- und eine Parktransformation, wobei in der Clark- Transformation die in Statorkoordinaten erfassten rotierenden Strangströme in zweiphasige rotierende Ströme gewandelt werden und das rotierende 2-Phasensystem durch die Parktransformation in ein statisches rotorbezogenes 2-Phasensystem überführt wird. Die auf diese Weise erfassten Stromdaten i_{q,ref} werden auf die jeweilige Drehwinkelposition des Motors 6 bezogen in einem Datenspeicher 19 aufgezeichnet.

Wenn die Korrekturdaten nicht nur auf den Drehwinkel des Motors 6 bezogen werden sollen, sondern auch ein nachfolgendes Getriebe einbezogen werden soli, kann der Positionssensor auch an einer nachfolgenden Stufe angebracht werden, so dass die gesamte Einheit bestehend aus Motor und Getriebe und eventuell weiterer mechanische Komponenten zur Korrekturdatenerfassung verwendet werden kann, so dass die Korrekturdaten sich auf die Drehwinkelposition, z. B. der Ausgangswelle eines Getriebes, beziehen. Es ist auch möglich, Korrekturdaten zu erfassen, die sich einerseits auf die Drehmomentwelligkeit des Rotors beziehen und andererseits weitere Störgrößen in einem an den Motor angeschlossenen Getriebe erfassen, wobei die Korrekturdaten beim Lauf des Motors einander überlagert sein können.

Die erfindungsgemäße Vorrichtung zum Reduzieren der Drehmomentwelligkeit verwendet wenigstens zwei Stromsensoren, die die Ausgangsströme an jeder Phase der Motoreinheit detektieren. Es ist ein Positionssensor am Rotor des Motors erforderlich, der die relative oder absolute Rotorposition feststellt. Die Stromsensoren führen auf einen Prozessor, dessen Ausgang mit einer Verstärkungsstufe gekoppelt ist, wobei der Prozessor eine zu den Strangströmen äquivalente Spannung an jeder Phase der Motorsteuereinheit einspeist. Der Prozessor enthält gleichzeitig den Speicher, der die Kompensationsströme zur Reduzierung der Drehmomentwelligkeiten auslesen kann. Die Korrekturdaten in Form von Stromamplituden für jede der Rotorwinkelstellungen werden entsprechend einem Additionsfaktor dem Steuerstrom für jeden der Rotorwinkelstellungen hinzugefügt.

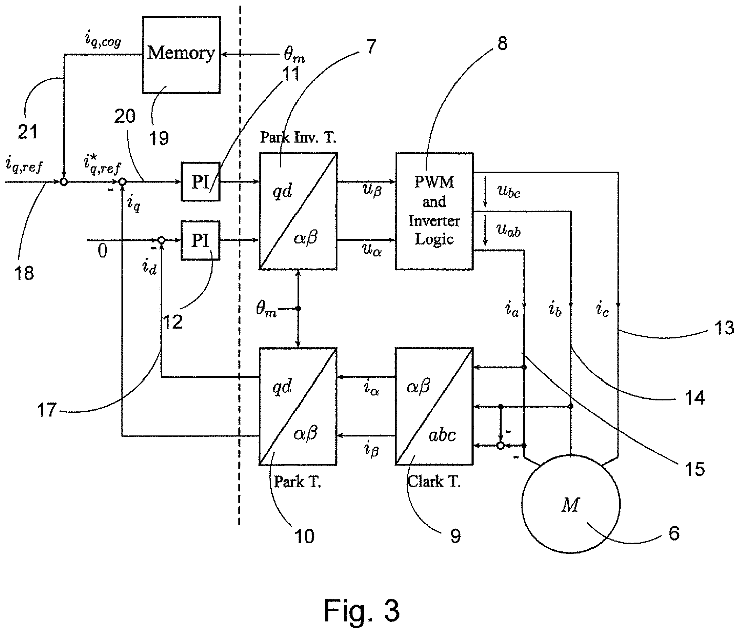

Fig. 3 zeigt eine entsprechende Ansicht von Fig. 2, bei dem die aus dem Speicher 19 ausgelesenen Korrekturdaten i_{q,cog} 21 einem Steuerstrom 18 überlagert werden, so dass dem Regler ein die Korrekturdaten berücksichtigender Steuerstrom i*_{q,ref} zugeführt wird. Der Motor 6 erhält dadurch korrigierte Ansteuerströme, die zu einem Ausgleich einer drehmomentabhängigen Welligkeit des Motorantriebs führen.

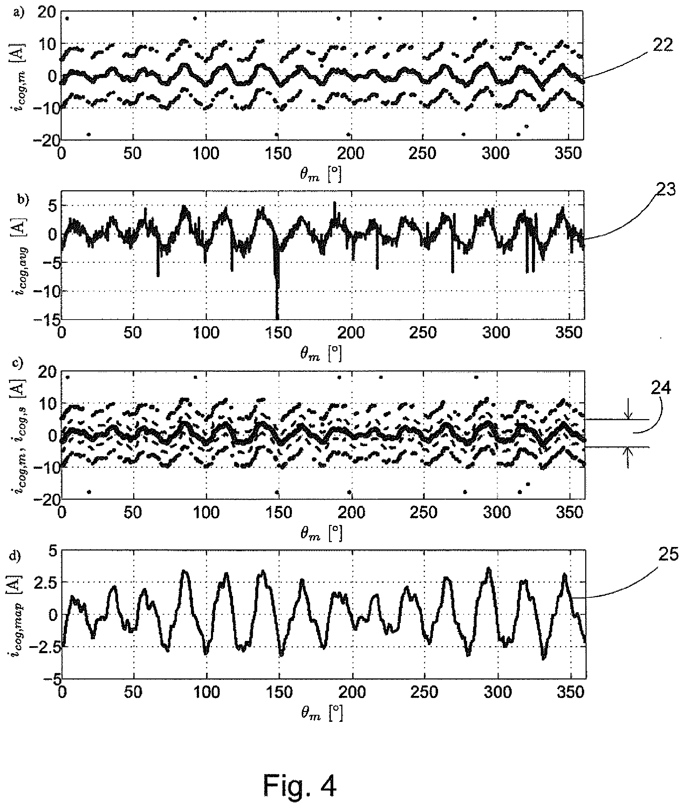

Fig. 4 zeigt eine Darstellung zur Aufbereitung der erfassten Korrekturdaten. In Fig. 4a ist dargestellt, dass zu jeder Winkelposition des Motors eine Mehrzahl von Korrekturdaten erfasst wird, die für jeden Winkel eine sogenannte Punktwolke 22 bilden. Aus diesen positionsabhängigen Punktwolken kann ein nach Drehwinkeln sortierter Mittelwert 23 errechnet werden, der in Fig. 4b dargestellt ist. Dieser Mittelwert 23 zeigt einige Ausreißer, die beispielsweise auf Reglerungenauigkeiten und Einschwingverhalten beruhen. Durch eine geeignete Begrenzungsschaltung können Ausreißer der in Fig. 4b gezeigten Art aus den jeweiligen Punktwolken entfernt werden. Die damit verbesserten Amplitudenwerte der erfassten Korrekturwerte werden dann zunächst nach ihrer Größe sortiert und es wird der jeweilige Medianwert der Daten ermittelt. Bezogen auf diese Medianwerte entlang des gesamten 360°-Umfangs wird nun gemäß Fig. 4c eine Hüllkurve festgelegt, die einen festen Tunnel (24) für die jeweiligen Medianwerte bildet. Damit lassen sich Datenwerte, die beispielsweise auf Rauschen oder anderen Unstetigkeiten beruhen, aus den Korrekturdaten ausgrenzen. Nun wird aus den innerhalb des Tunnels liegenden Datenwerten ein Mittelwert erzeugt, welcher eine positionsbezogene Kurve 25 der Korrekturdaten bildet, wie sie in Fig. 4d dargestellt ist. Diese Daten werden im Speicher abgelegt und beim Lauf des Motors im Normalbetrieb zur Korrektur der Führungsgröße verwendet.

Mit Hilfe dieses Verfahrens kann eine einfache, aber genaue Datenaufbereitung erfolgen, ohne dass Filterfunktionen, die eine aufwendige Signalverarbeitung erfordern würden, erforderlich wären. Als Ergebnis ergibt sich ein im Wesentlichen glattes Kompensationssignal 25, das beim Betrieb des Motors zur Kompensation der Drehmomentwelligkeit zu Verfügung steht.

Bei Verwendung eines Positionsprädiktorreglers können die Korrekturdaten dem Steuerstrom des Motors auch zu einem Zeitpunkt zugeführt werden, der von der tatsächlichen Regelposition des Motors abweicht. Damit ist es möglich, in Abhängigkeit von der Geschwindigkeit des Motors den jeweiligen Zeitpunkt der Aufbringung der Korrekturdaten zu variieren, um so Laufzeitdifferenzen des verwendeten Reglers und weitere geschwindigkeitsabhängige Steuergrößen auszugleichen.

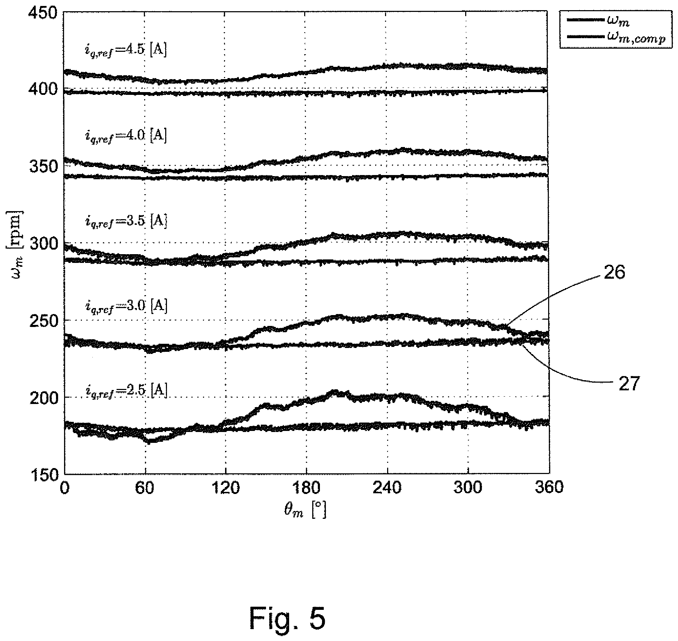

In Fig. 5 ist eine Darstellung mehrerer Kurven bei unterschiedlichen Drehgeschwindigkeiten eines Motors dargestellt, bei denen die jeweiligen geschwungenen Kurven 26 eine verbleibende Drehmomentwelligkeit bei höheren Drehzahlen zeigen, während die jeweiligen im Wesentlichen geradlinigen Kurven 27 den Zustand darstellen, wenn ein Positionsprädiktorregler verwendet ist, der eine Verschiebung der Korrekturdaten ermöglicht.

Die Berechnung der Verschiebung erfolgt durch Feststellung der Rotorfrequenz des in einem Rechenschritt zurückgelegten Winkels unter Berücksichtigung der Sensorauflösung. Damit lässt sich eine neue Position zur Aufbringung des Korrektursignals ermitteln. In weiterer Ausgestaltung des Verfahrens ist es auch möglich, eine Verschiebung der Position nicht nur bei Annahme einer konstanten Geschwindigkeit des Motors, sondern auch in Abhängigkeit von Geschwindigkeitsänderungen, d. h. einer Beschleunigung oder Abbremsung, vorzunehmen.

Bei dem Verfahren zur Erfassung der Rotor-/Sensorpositionen hängt die Genauigkeit der Erfassung auch von der Auflösung des Positionssensors ab, Daher sollte die Auflösung so hoch sein, dass neben den konstruktiv bedingten Störgrößen aufgrund der durch die Magnete bewirkten Drehmomentwelligkeit auch sonstige Einflussgrößen, wie Störgrößen aus der Lagerung, usw. ausgeglichen werden können,

### Bezugszeichenliste

- 1: Rotor
- 2: Feder
- 3: Feder
- 4: Magnet (Nord)
- 5: Magnet (Süd)
- 6: Motor
- 7: Inverses Park Transmissionsmodul
- 8: Pulsweiten-Modul und Inverter
- 9: Clark-Transmissionsmodul
- 10: Park-Transmissionsmodul
- 11: PI-Regler
- 12: PI-Regler
- 13: Strangstrom i_{c}
- 14: Strangstrom i_{b}
- 15: Strangstrom iₐ
- 16: PI-Regler
- 17: Strom i_{d}
- 18: Referenzstrom i_{q,ref}
- 19: Speicher
- 20: korrigierter Strom i_{q*,ref}
- 21: Korrekturdaten i_{q,cog}
- 22: Punktwolke
- 23: Mittelwert
- 24: Tunnel
- 25: Referenzstromwert
- 26: geschwungene Kurve
- 27: geradlinige Kurve

## Patentansprüche

1. Verfahren zur Verringerung der Drehmomentwelligkeit eines bürstenlosen Gleichstrommotors (6) in Gelenken eines Roboters mit einem Stator, einem Rotor und einer Motorsteuereinheit, über die der Motor mehrphasig angesteuert wird, mit einem Datenspeicher (1) zur Speicherung von drehwinkelabhängigen Korrekturdaten des Steuerstroms des Motors (6), welche den Augenblickswerten zur Ansteuerung des Motors aufgeprägt werden, wobei
- in einem ersten Schritt für jede Position des Rotors den Rotor in dieser Position haltende Strangströme ermittelt werden, aus denen Referenzstromdaten abgeleitet werden, welche in einer Tabelle des Datenspeichers (19) zusammen mit den jeweiligen von einem Positionssensor ermittelten Positionsdaten des Rotors abgespeichert werden, und
- in einem zweiten Schritt im laufenden Betrieb des Motors die im Datenspeicher hinterlegten positionsabhängigen Referenzstromdaten mit dem Steuerstrom des Motors derart verknüpft werden, dass die ursprüngliche Drehmomentwelligkeit des Motors aufgehoben oder verringert wird,
wobei die an jeder Rotorposition ermittelten Referenzstromdaten in einem separaten Aufbereitungsschritt gefiltert und geglättet werden, indem nach einer Vorfilterung der Referenzstromdaten mit einem Mittelwert- und anschließendem Medianfilter um die ermittelten Medianwerte über den gesamten erfassten Drehwinkelbereich des Motors ein Tunnel (24) gebildet wird, der in einem festen Abstand um die positionsbezogenen Medianwerte verläuft, wobei aus den innerhalb des Tunnels liegenden Referenzstromdaten für jede Position jeweils ein gemittelter Wert errechnet wird, bevor die gemittelten Werte abschließend geglättet werden, und die derart ermittelten Werte als bereinigte Referenzstromwerte (25) in dem Speicher (19) abgespeichert werden.

2. Verfahren nach Anspruch 1,
**dadurch gekennzeichnet, dass** der Motor ein bürstenloser Gleichstrommotor ist, der über eine Vektorregelung (7, 8, 9, 10) angesteuert wird, wobei die Strangströme des Motors über eine Leistungselektronik als pulsweitenmodulierte Spannungen erzeugt werden, die über eine umgekehrte Park-Transformation (7) aus einem zweiphasigen Steuerstrom abgeleitet werden, und wobei die Strangströme im Rückkopplungskreis über eine Clark (9)- und eine Park (10)-Transformation auf den Steuerstrom rückgeführt werden.

3. Verfahren nach Anspruch 2,
**dadurch gekennzeichnet, dass** ein Positionsprädiktorregler (16) vorgesehen ist, über den die positionsbezogene Aufprägung der aus dem Datenspeicher (19) ausgelesenen Referenzstromdaten auf den Steuerstrom in Abhängigkeit von der Drehgeschwindigkeit des Rotors variiert werden kann.

4. Anordnung zur Steuerung eines bürstenlosen Gleichstrommotors zur Erfassung und zum Ausgleich einer Drehmomentwelligkeit des Motors (6) mit einem Stator und einem Rotor mittels einer Motorsteuereinheit, über die der Motor (6) mehrphasig ansteuerbar ist, mit einem Positionssensor am Rotor des Motors zur Erfassung der momentanen relativen oder absoluten Position des Rotors, und mit einem Datenspeicher zur Speicherung von drehwinkelabhängigen Korrekturdaten des Steuerstroms des Motors, welche den Augenblickswerten zur Ansteuerung des Motors aufgeprägt werden können, wobei wenigstens zwei Stromsensoren zur Erfassung der Strangströme des Rotors vorgesehen sind, die Strangströme zur Ansteuerung des Motors in drehwinkelabhängigen Positionen des Rotors feststellbar und als positionsbezogene Referenzstromwerte in einem Datenspeicher speicherbar sind, die Referenzstromwerte im laufenden Betrieb des Motors aus dem Datenspeicher (19) auslesbar und dem Steuerstrom zur Steuerung des Motors aufprägbar sind, wobei im laufenden Betrieb des Motors die im Datenspeicher hinterlegten positionsabhängigen Referenzstromdaten mit dem Steuerstrom des Motors derart verknüpft werden, dass die ursprüngliche Drehmomentwelligkeit des Motors aufgehoben oder verringert wird, wobei die an jeder Rotorposition ermittelten Referenzstromdaten in einem separaten Aufbereitungsschritt gefiltert und geglättet werden, indem nach einer Vorfilterung der Referenzstromdaten mit einem Mittelwert- und anschließendem Medianfilter um die ermittelten Medianwerte über den gesamten erfassten Drehwinkelbereich des Motors ein Tunnel (24) gebildet wird, der in einem festen Abstand um die positionsbezogenen Medianwerte verläuft, wobei aus den innerhalb des Tunnels liegenden Referenzstromdaten für jede Position jeweils ein gemittelter Wert errechnet wird, bevor die gemittelten Werte abschließend geglättet werden, und die derart ermittelten Werte als bereinigte positionsbezogene Referenzstromwerte in dem Datenspeicher abgespeichert werden.

5. Anordnung nach Anspruch 4,
**dadurch gekennzeichnet, dass** die Motorsteuereinheit eine Vektorregelung enthält, die Folgendes umfasst: eine Transmissionsmodul (7) zur Wandlung des Steuerstroms aus einem statischen 2-Phasensystem in ein rotierendes 2-Phasensystem, eine Leistungselektronik (8) zur dreiphasigen Ansteuerung des Rotors, ein Transformationsmodul (9) zur Umwandlung der Strangströme des Rotors in ein rotierendes 2-Phasensystem, und ein Transformationsmodul (10) zur Umwandlung des rotierenden 2-Phasensystems in ein statisches 2-Phasensystem, dessen Stromwerte auf den Steuerstrom rückgekoppelt werden.

6. Anordnung nach Anspruch 5,
**dadurch gekennzeichnet, dass** die Leistungselektronik ein Modul zur Pulsweitenmodulation und eine Schaltung zur Verstärkung der Phasenspannungen des Rotors aufweist

7. Anordnung nach Anspruch 5
**dadurch gekennzeichnet, dass** der Steuerstrom über einen Positionsprädiktorregler geführt ist, der aus der Rotordrehzahl und der Winkel-Auflösung des Positionssensors einen neuen Positionswert ermittelt, an dem im laufenden Betrieb des Motors die Referenzstromdaten der ursprünglichen Position in Abhängigkeit von der momentanen Drehzahl des Motors dem Steuerstrom an einer neuen Position aufgeprägt werden.

8. Anordnung nach einem oder mehreren der Ansprüche 4 - 7,
**dadurch gekennzeichnet, dass** die Erfassung der Korrekturdaten an einem bürstenlosen Gleichstrommotor erfolgt, dem ein Getriebe nachgeschaltet ist und der im Gelenk eines Roboters eingesetzt ist, wobei die Korrekturdaten in Abhängigkeit von der Position des Motors (6) und/oder der Position einer dem Motor (6) nachgeschalteten Getriebe- oder weiteren Antriebseinheit erfasst werden.

## Claims

1. A method for reducing the torque ripple of a brushless DC motor (6) in joints of a robot with a stator, a rotor and a motor control unit by means of which the motor is actuated in a multi-phase manner, having a data store (1) for storing rotational angle-dependent adjustment data of the control current to the motor (6) which are applied to the instantaneous values for actuating the motor, wherein
- in a first step for each position of the rotor, string currents holding the rotor in this position are determined, from which reference current data are derived which are stored in a table of the data store (19) along with the respective positional data of the rotor determined by a positional sensor
and
- in a second step during continuous motor operation, the position-dependent reference current data stored in the data store are linked to the control current of the motor in such a manner that the original torque ripple of the motor is removed or reduced,
wherein the reference current data determined at each rotor position are filtered and smoothed in a separate processing step, in that following pre-filtering of the reference current data using a mean value and subsequent median filter, a tunnel (24) is created about the detected median values over the entire detected rotational angle range of the motor, which tunnel runs at a fixed interval about the position-related median values, wherein a mean value is calculated for each position from the reference current data lying within the tunnel before the means values are then finally smoothed and the values determined in this way are stored in the store (19) as adjusted reference current values (25).

2. The method according to claim 1,
**characterized in that** the motor is a brushless DC motor which is actuated via a vector control (7, 8, 9, 10), wherein the string currents of the motor are generated via power electronics as pulse-width-modulated voltages which are derived via a reverse park transformation (7) from a two-phase control current and wherein the string currents are fed back to the control current in the feeder circuit via a Clarke (9) and Park (10) transformation.

3. The method according to claim 2,
**characterized in that** a position predictor controller (16) is provided, via which the position-related application of the reference current data read from the data store (19) to the control current can be varied depending on the rotational speed of the rotor.

4. An arrangement for controlling a brushless DC motor for detecting and balancing a torque ripple of the motor (6) with a stator and a rotor by means of a motor control unit, via which the motor (6) can be actuated in a multi-phase manner, with a positional sensor on the rotor of the motor for detecting the instantaneous relative or absolute position of the rotor and with a data store for storing rotational angle-dependent adjustment data of the control current of the motor which can be applied to the instantaneous values to actuate the motor, wherein at least two current sensors are provided for actuating the string currents of the rotor, the string currents for actuating the motor can be detected in rotational angle-dependent positions of the rotor and the position-related reference current values can be stored in a data store, the reference current values can be read from the data store (19) when the motor is in continuous operation and applied to the control current for controlling the motor, wherein when the motor is operating continuously the position-dependent reference current data stored in the data store are linked to the control current of the motor in such a manner that the original torque ripple of the motor is removed or reduced, wherein the reference current data determined at each rotor position are filtered and smoothed in a separate processing step, in that following pre-filtering of the reference current data using a mean value filter and subsequent median filter, a tunnel (24) is created about the detected median values over the entire detected rotational angle range of the motor, which tunnel runs at a fixed interval about the position-related median values, wherein a mean value is calculated for each position from the reference current data lying within the tunnel before the mean values are then finally smoothed and the values determined in this way are stored in the data store as adjusted, position-related reference current values.

5. The arrangement according to claim 4,
**characterized in that** the motor control unit contains a vector control which comprises the following: a transmission module (7) for converting the control current from a static 2-phase system into a rotating 2-phase system, power electronics (8) for the three-phase actuation of the rotor, a transformation module (9) for conversion of the string currents of the rotor into a static 2-phase system and a transformation module (10) for conversion of the rotating 2-phase system into a static 2-phase system, the current values whereof are fed back to the control current.

6. The arrangement according to claim 5,
**characterized in that** the power electronics have a module for pulse width modulation and a circuit for amplifying the phase voltages of the rotor.

7. The arrangement according to claim 5,
**characterized in that** the control current is conducted via a position predictor controller which determines a new positional value from the rotor speed and the angle resolution of the positional sensor, at which positional value the reference current data of the original position are applied to the control current at a new position, depending on the instantaneous speed of the motor, during continuous operation of the motor.

8. The arrangement according to one or more of claims 4 - 7,
**characterized in that** the detection of the adjustment data takes place on a brushless DC motor which has a transmission downstream and which is inserted in the joint of a robot, wherein the adjustment data are detected depending on the position of the motor (6) and/or the position of transmission unit or other drive unit downstream of the motor (6).

## Revendications

1. Procédé de réduction de l'ondulation de couple d'un moteur à courant continu sans balai (6) dans des articulations d'un robot comportant un stator, un rotor et une unité de commande de moteur, par l'intermédiaire de laquelle le moteur peut être commandé de manière multiphasée, comportant une mémoire de données (1) pour mémoriser des données de correction du courant de commande du moteur (6) fonction de l'angle de rotation, qui sont appliquées aux valeurs instantanées afin de commander le moteur, dans lequel
- dans un premier état pour chaque position du rotor des courants de phase maintenant le rotor dans cette position sont détermines, d'après lesquels les données de courant de référence sont déduites, qui sont mémorisées dans un tableau de la mémoire de données (19) conjointement aux données de position du rotor déterminées respectivement par un capteur de position, et
- dans une deuxième étape en fonctionnement du moteur les données de courant de référence fonction de la position déposée dans la mémoire de données sont interconnectées avec le courant de commande du moteur de telle sorte que l'ondulation de couple d'origine du moteur soit annulée ou réduite,
dans lequel les données de courant de référence déterminées à chaque position du rotor sont filtrées et lissées dans une étape de préparation séparée, en formant un tunnel (24) après un pré filtrage des données de courant de référence avec un filtre de valeur moyenne et ensuite un filtre médian par rapport aux valeurs médiane déterminées sur la totalité de la plage d'angle de rotation détectée du moteur, qui s'étend dans un écart fixe par rapport aux valeurs médianes relatives à la position, dans lequel d'après les données de courant de référence présentes à l'intérieur du tunnel pour chaque position respectivement une valeur moyenne est calculée avant que les valeurs moyennes soient finalement lissées et les valeurs ainsi déterminées sont mémorisées comme des valeurs de courant de référence apurées (25) dans la mémoire (19).

2. Procédé selon la revendication 1,
**caractérisé en ce que** le moteur est un moteur à courant continu sans balai, qui est commandé par l'intermédiaire d'une régulation à vecteur (7, 8, 9, 10), dans lequel les courants de phase du moteur sont générés par l'intermédiaire d'une électronique de puissance comme des tensions modulées par largeur d'impulsion, qui sont déduites par l'intermédiaire d'une transformation de Park inversée (7) d'un courant de commande biphasé, et dans lequel les courants de phase sont réintroduits dans le circuit de rétroaction sur le courant de commande par l'intermédiaire d'une transformation de Clark (9) et de Park (10).

3. Procédé selon la revendication 2,
**caractérisé en ce que** un régulateur de prédiction de position (16) est prévu, par l'intermédiaire duquel l'application relative à la position des données de courant de référence déposées dans la mémoire de données (19) sur le courant de commande peut être variée en fonction de la vitesse de rotation du rotor.

4. Dispositif de commande d'un moteur à courant continu sans balai pour détecter et pour compenser une ondulation de couple du moteur (6) avec un stator et un rotor au moyen d'une unité de commande de moteur, par l'intermédiaire duquel le moteur (6) peut être commandé de manière multiphasée, comportant un capteur de position sur le rotor du moteur pour détecter la position relative ou absolue momentanée du rotor et comportant une mémoire de données pour mémoriser des données de correction du courant de commande du moteur fonction de l'angle de rotation, qui peuvent être appliquées aux valeurs instantanées pour commander le moteur, dans lequel au moins deux capteurs de courant pour détecter les courants de phase du rotor sont prévus, les courants de phase pour commander le moteur peuvent être déterminés à des positions du rotor fonction de l'angle de rotation et peuvent être mémorisées comme des valeurs de courant de référence relatives à la position dans une mémoire de données, les valeurs de courant de référence en fonctionnement du moteur peuvent être lues dans la mémoire de données (19) et peuvent être appliquées au courant de commande pour commander le moteur, dans lequel en fonctionnement du moteur les données de courant de référence fonction de la position déposées dans la mémoire de données sont interconnectées avec le courant de commande du moteur de telle sorte que l'ondulation de couple d'origine du moteur soit annulée ou réduite, dans lequel les données de courant de référence déterminées à chaque position du rotor sont filtrées et lissées dans une étape de préparation séparée, en formant un tunnel (24) après un pré filtrage des données de courant de référence avec un filtre de valeur moyenne et ensuite un filtre médian par rapport aux valeurs médiane déterminées sur la totalité de la plage d'angle de rotation détectée du moteur, qui s'étend dans un écart fixe par rapport aux valeurs médianes relatives à la position, dans lequel d'après les données de courant de référence présentes à l'intérieur du tunnel pour chaque position respectivement une valeur moyenne est calculée avant que les valeurs moyennes soient finalement lissées et les valeurs ainsi déterminées sont mémorisées comme des valeurs de courant de référence relatives à la position apurées dans la mémoire de données.

5. Dispositif selon la revendication 4,
**caractérisé en ce que** l'unité de commande de moteur contient une régulation à vecteur, qui comprend ce qui suit : un module de transmission (7) pour convertir le courant de commande provenant d'un système à 2 phases statique en un système à 2 phases rotatif, une électronique de puissance (8) pour la commande triphasée du rotor, un module de transformation (9) pour convertir les courants de phase du rotor en un système à 2 phases rotatif et un module de transformation (10) pour convertir à le système à 2 phases rotatif en un système à 2 phases statique, dont les valeurs de courant sont appliquées en retour sur le courant de commande.

6. Dispositif selon la revendication 5,
**caractérisé en ce que** l'électronique de puissance présente un module de modulation par largeur d'impulsion et un circuit d'amplification des tensions de phase du rotor.

7. Dispositif selon la revendication 5,
**caractérisé en ce que** le courant de commande est guidé par l'intermédiaire d'un régulateur de prédiction de position, qui détermine d'après la vitesse de rotation du rotor et la résolution angulaire du capteur de position une nouvelle valeur de position, à laquelle en fonctionnement du moteur les données de courant de référence de la position d'origine sont appliquées en fonction de la vitesse de rotation momentanée du moteur au courant de commande à une nouvelle position.

8. Dispositif selon une ou plusieurs des revendications 4-7,
**caractérisé en ce que** la détection des données de correction a lieu sur un moteur à courant continu sans balai, qui est branchée en aval d'une transmission et qui est employé dans l'articulation d'un robot, dans lequel les données de correction sont détectées en fonction de la position du moteur (6) et/ou de la position d'une unité de transmission ou une unité d'entraînement supplémentaire branchée en aval du moteur (6).
